(19) Europäisches Patentamt / European Patent Office / Office européen des brevets

(11) **EP 2 752 363 B1**

(12) **FASCICULE DE BREVET EUROPEEN**

(45) Date de publication et mention
de la délivrance du brevet:
**13.01.2016 Bulletin 2016/02**

(51) Int Cl.:
**B64C 1/40** *(2006.01)* **F04B 39/00** *(2006.01)*
**F16L 55/033** *(2006.01)*

(21) Numéro de dépôt: **13199874.2**

(22) Date de dépôt: **31.12.2013**

(54) **Dispositif de réduction du bruit émis par un conduit et conduit d'aéronef équipé d'un tel dispositif**

Lärmreduzierungsvorrichtung für den von einer Rohrleitung emittierten Lärm, und Flugzeugrohrleitung, die mit einer solchen Vorrichtung ausgestattet ist

Device for reducing the noise emitted by a duct and aircraft duct provided with such a device

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.01.2013 FR 1300017**

(43) Date de publication de la demande:
**09.07.2014 Bulletin 2014/28**

(73) Titulaire: **Dassault Aviation**
**75008 Paris (FR)**

(72) Inventeur: **Barré, Sébastien**
**78700 CONFLANS-SAINTE-HONORINE (FR)**

(74) Mandataire: **Domenego, Bertrand**
**Cabinet Lavoix**
**2, place d'Estienne d'Orves**
**75441 Paris Cedex 09 (FR)**

(56) Documents cités:
**DE-A1- 2 930 162      DE-C- 949 428**
**US-A1- 2009 269 219**

**Description**

La présente invention est relative à un dispositif de réduction du bruit émis par un conduit, notamment par un conduit appartenant à un système d'un aéronef (conditionnement d'air, starter-generator, Auxiliary Power Unit).

Lorsqu'un avion est en phase d'avitaillement (avion au sol et moteurs éteints), divers équipements restent susceptibles d'être en fonctionnement, notamment :

- le système de conditionnement d'air, qui permet de réguler la température dans la cabine ;
- le starter-generator, qui génère l'électricité nécessaire au fonctionnement des équipements de l'avion - conditionnement d'air notamment - lorsque les moteurs sont éteints ;
- l'APU (Auxiliary Power Unit), qui actionne le starter-generator.

Ces équipements génèrent du bruit autour de l'avion. Ce bruit sort par les conduits d'entrée et sortie d'air de ces équipements. Il est responsable de nuisances sonores impactant le personnel intervenant au sol (opérations de maintenance,...) et les clients se déplaçant autour de l'avion.

Pour réduire ces nuisances, l'Organisation de l'Aviation Civile Internationale (OACI) a défini des recommandations spécifiant des seuils de bruit externe à ne pas dépasser autour de l'avion au sol. On note par ailleurs une pression croissante des autorités aéroportuaires quant à la réduction du bruit au sol.

On connaît des documents DE 949 428, US 2009/0269219 et DE 29 30 162 des dispositifs de réduction de bruit.

Les techniques habituellement utilisées pour réduire le bruit des équipements en question sont basées sur l'utilisation de couches de matériau acoustiquement absorbant, disposées sur la paroi des conduits ou sur des cloisons additionnelles prévues à l'intérieur de ces conduits.

Ces technologies existantes présentent plusieurs inconvénients :

- (a) des atténuations parfois insuffisantes : leur efficacité est directement liée à la quantité de matériau absorbant utilisée. Pour réduire significativement le bruit, il est nécessaire de recouvrir une très grande partie des parois des conduits. Ceci s'avère souvent problématique car certaines zones des conduits ne peuvent pas être traitées du fait:

  ◦ de la géométrie locale du conduit (coudes, raccords entre les pièces du conduit, angles...) ;
  ◦ d'un manque de place autour du conduit pour y intégrer une épaisseur suffisante de matériau.

Les conduits des équipements sont également très courts. La surface de conduit pouvant être recouverte est ainsi parfois trop restreinte pour une réduction efficace du bruit.

- (b) des contraintes d'encombrement : les matériaux absorbants ont des épaisseurs de plusieurs centimètres, qui viennent s'ajouter au diamètre des conduits. Leur intégration implique des contraintes sur le positionnement des éléments voisins (fixations, éléments structuraux, autres conduits...) afin de libérer la place nécessaire.
- (c) de masse : les épaisseurs et les surfaces importantes requises pour les matériaux absorbants impliquent des pénalités en masse conséquentes, qui pénalisent l'avion. Ceci est d'autant plus accentué lorsque des cloisons traitées sont ajoutées dans le conduit.
- (d) des contraintes thermiques : l'écoulement traversant certains conduits est chauffé, ce qui implique le choix de matériaux absorbants compatibles avec des hautes températures. Ceux-ci s'avèrent plus lourds et moins efficaces acoustiquement, ce qui rend ces technologies difficiles à appliquer et moins performantes dans des conduits chauffés.

L'invention a pour but de fournir un dispositif de réduction de bruit qui soit efficace même en l'absence de matériau acoustiquement absorbant.

A cet effet, l'invention a pour objet un dispositif selon la revendication 1.

Le dispositif selon l'invention peut comprendre l'une ou plusieurs des caractéristiques des revendications 2 à 8.

L'invention a également pour objet un conduit d'aéronef selon la revendication 9.

Ce conduit peut notamment être conforme à la revendication 10.

Des exemples de réalisation de l'invention vont maintenant être décrits en regard du dessin annexé, sur lequel :

- la figure 1 représente schématiquement, en perspective, une partie d'un conduit conforme à l'invention ;
- la figure 2 représente schématiquement, en coupe longitudinale, l'implantation du conduit de la figure 1,
- la figure 3 est une vue en bout montrant un autre mode de réalisation de la grille acoustique suivant l'invention ;
- la figure 4 représente un détail de la grille de la figure 3 ;
- la figure 5 est une vue en bout montrant une variante de la grille acoustique de la figure 1 ;
- la figure 6 est une vue en bout montrant une variante de la grille acoustique de la figure 3 ; et
- la figure 7 représente, de façon analogue à la figure 2, une variante de conduit conforme à l'invention.

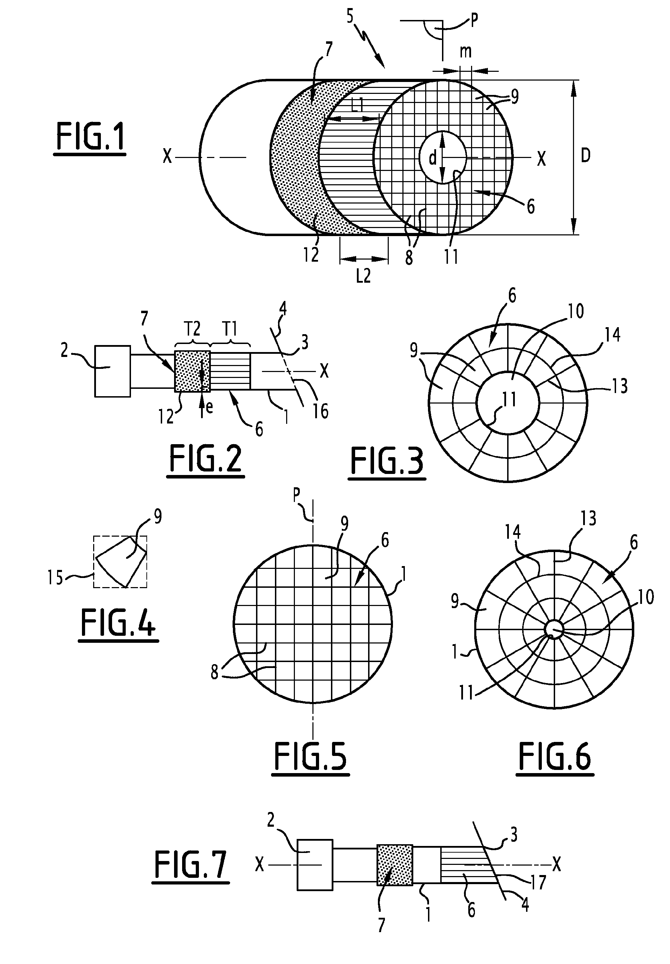

On a représenté schématiquement sur la figure 1 une partie d'un conduit 1 qui est typiquement un conduit d'entrée ou de sortie d'air d'un système d'un aéronef, par exemple un système de conditionnement d'air. Comme on le voit sur la figure 2, le conduit 1 se raccorde en amont à un équipement bruyant 2 tel que ceux indiqués plus haut, et en aval à une ouverture 3 du fuselage 4 de l'aéronef.

Les termes « amont » et « aval » s'entendent par rapport à la propagation du bruit émis par l'équipement 2.

Le conduit 1 est à section circulaire. La partie représentée sur la figure 1 est rectiligne, d'axe X-X supposé horizontal. Pour plus de clarté, sa section transversale aval a été ramenée dans le plan du dessin sur la figure 1.

Dans ce qui suit, on utilise les notations suivantes :

- $f_{max}$ : fréquence maximale du bruit à atténuer
- $\lambda_{fmax}$ : longueur d'onde du bruit à la fréquence $f_{max}$
- $f_{min}$ : fréquence minimale du bruit à atténuer
- $\lambda_{fmin}$ : longueur d'onde du bruit à la fréquence $f_{min}$
- D : diamètre du conduit

Le conduit 1 est équipé, dans un premier tronçon T1 du conduit 1 situé dans une partie intermédiaire du conduit ou, en variante, à son extrémité aval, d'un dispositif de réduction de bruit 5 constitué d'une grille acoustique 6 et d'une couche 7 de matériau acoustiquement absorbant.

La grille 6 est constituée d'un ensemble de cloisons 8 qui s'étendent dans deux directions perpendiculaires l'une à l'autre, par exemple perpendiculairement et parallèlement au plan diamétral vertical P du conduit. Les cloisons 8 définissent, en vue en bout (figure 1), une pluralité de mailles 9 de forme carrée, de côté m.

La longueur de la grille 6, suivant l'axe X-X est notée L1.

Les relations suivantes sont vérifiées :

$$(1)\ m < \lambda_{fmax}/2\ ;$$

$$(2)\ L1 > 1,8\ \lambda_{fmin.}$$

On a constaté que lorsque ces relations (1) et (2) sont simultanément vérifiées, la grille 6 procure en elle-même une atténuation substantielle du bruit pour les fréquences comprises entre $f_{min}$ et $f_{max}$. En effet, dans cette gamme de fréquences, la grille 6 crée une coupure qui bloque la propagation du bruit à travers la grille. Seule une faible portion du bruit parvient à franchir la grille, l'essentiel de l'énergie acoustique étant renvoyé vers la source.

Dans l'exemple de la figure 1, la grille comporte une ouverture centrale 10 éventuellement matérialisée par un tube intérieur 11 d'axe X-X. Le diamètre d de l'ouverture 10 est tel que d < 0,75 D, où D désigne le diamètre intérieur du conduit 1.

Dans le cas d'un conduit de section non circulaire (section rectangulaire ou autre), la limite de l'ouverture centrale à partir du centre du conduit doit être inférieure à 75% de la distance entre le centre et la paroi du conduit, dans toute direction partant du centre.

L'ouverture centrale 10 apporte l'avantage suivant.

On a constaté que c'est la partie périphérique de la grille qui contribue majoritairement à la capacité d'atténuation du bruit par cette grille. Par suite, l'ouverture 10 permet de diminuer la masse ainsi que les pertes de charge sans nuire de façon importante aux performances acoustiques de la grille.

Dans l'exemple de la figure 1, le conduit 1 est en outre équipé, sur un deuxième tronçon T2 situé immédiatement en amont du tronçon T1 et adjacent à celui-ci, de la couche acoustiquement absorbante 7 précitée. Celle-ci est constituée d'au moins une bande annulaire 12 de matériau acoustiquement absorbant, tel que de la laine de roche ou de la laine de verre. La longueur L2 et l'épaisseur e de la bande sont telles que :

$$(3)\ L2 > \lambda_{fmax},$$

et

$$(4)\ e > \lambda_{fmax}/4.$$

Le tronçon T2 est constitué de tôle perforée ou de matériau composite perforé, ou bien de toile métallique ou composite de façon à permettre à l'onde acoustique d'atteindre le matériau absorbant, et la bande 12 est disposée autour de ce tronçon T2.

Le rôle de la bande 12 est d'éviter un effet de résonance acoustique entre la source de bruit 2 et la grille 6. Son rôle est en particulier d'absorber les ondes sonores réfléchies par la grille 6 vers la source de bruit.

En variante, la couche peut ne s'étendre que sur une fraction du pourtour de tronçon T2, au prix d'une moindre efficacité.

En variante, le conduit 1 est dépourvu de bande annulaire en matériau acoustiquement absorbant, la grille 6 suffisant à obtenir l'atténuation acoustique désirée.

En variante (figure 3), d'autres formes de mailles que la forme carrée peuvent être utilisées dès lors que le plus petit carré dans lequel est inscrit chaque maille a un côté m satisfaisant à la relation (1) ci-dessus.

En particulier, comme représenté sur la figure 3, la grille peut être constituée de cloisons radiales 13 et de cloisons cylindriques 14, donnant naissance à des mailles 9 trapézoïdales à deux côtés arrondis. La figure 4 montre une telle maille, ainsi que le plus petit carré 15 dans lequel elle est inscrite.

En variante (figure 5), la grille 6 de la figure 1 peut être dépourvue d'ouverture centrale.

En variante également (figure 6), la grille de la figure 3 peut être pratiquement dépourvue d'ouverture centrale, les bords radialement intérieurs des cloisons radiales 13 étant très proches les uns des autres, et éventuellement reliés à un tube central 11 de faible diamètre juste nécessaire pour maintenir la géométrie de la grille.

Dans les modes de réalisation décrits jusqu'ici, comme représenté à la figure 2, la grille 6 est située dans un tronçon T1 intermédiaire du conduit 1, c'est-à-dire que son extrémité aval est espacée de l'ouverture 3 du fuselage. Comme représenté schématiquement sur la figure 2, cette ouverture est souvent équipée d'une grille 16 qui n'a aucune finalité acoustique mais a un rôle esthétique et/ou aérodynamique.

En variante, comme représentée sur la figure 7, l'extrémité aval 17 de la grille acoustique 6 peut elle-même former la grille à fonction esthétique et/ou aérodynamique située sensiblement dans l'ouverture 3, de sorte que la grille 16 de la figure 2 peut être omise.

On a également représenté sur la figure 7 une autre variante, à savoir un positionnement de la couche acoustiquement absorbante 7 à une certaine distance en amont de la grille 6.

Le dispositif décrit ci-dessus présente plusieurs avantages par rapport aux technologies précédentes :

- implantation localisée : il est intégré dans une zone localisée du conduit, ce qui rend son implantation plus facile, sans affecter son efficacité acoustique.
- flexibilité de son emplacement : son efficacité ne dépend pas de sa position le long du conduit. il n'y a donc pas de contrainte acoustique sur le choix de son emplacement qui s'avère ainsi plus flexible.
- synergie possible avec les autres technologies : le dispositif peut être employée conjointement avec les autres technologies existantes, ce qui permet de sommer les efficacités et de pallier à leur insuffisance.
- faibles contraintes d'encombrement : le dispositif s'intègre à l'intérieur du conduit et non à l'extérieur, ce qui réduit son encombrement vis-à-vis des éléments voisins du conduit.
- moins de contraintes thermiques : son efficacité découle de sa géométrie et non du choix de son matériau. Il s'adapte donc plus aisément aux hautes températures sans dégrader sa performance acoustique.
- possibilité de se substituer à des éléments existants.

Comme indiqué ci-dessus, la grille 6 peut remplacer une grille esthétique et/ou aérodynamique conventionnelle. Elle ajoute alors son action de réduction du bruit aux autres fonctions de la grille conventionnelle 16.

## Revendications

1. Dispositif de réduction du bruit émis par un conduit (1) appartenant à un système d'un aéronef, comprenant une grille acoustique (6) disposée dans un tronçon T1 du conduit, cette grille ayant une longueur L1, suivant l'axe (X-X) dudit tronçon, et comportant une pluralité de mailles (9) dont chacune s'inscrit dans un carré de côté m, **caractérisé en ce que** les relations suivantes sont remplies :

$$L1 > 1,8 \, \lambda_{fmin}$$

$$m < \lambda_{fmax}/2,$$

où $f_{max}$ est la fréquence maximale du bruit à atténuer,
$f_{min}$ est la fréquence minimale du bruit à atténuer,
$\lambda_{fmax}$ est la longueur d'onde du bruit à la fréquence $f_{max}$, et
$\lambda_{fmin}$ est la longueur d'onde du bruit à la fréquence $f_{min}$.

2. Dispositif suivant la revendication 1, **caractérisé en ce que** la grille (6) comporte une ouverture centrale (10) dont la dimension transversale est, dans toute direction transversale du conduit, inférieure à 0,75 D, où D désigne la dimension d'ouverture du conduit dans la même direction transversale.

3. Dispositif suivant la revendication 1 ou 2, **caractérisé en ce que**, en vue en bout, la grille (6) est à mailles (9) carrées.

4. Dispositif suivant la revendication 1 ou 2, **caractérisé en ce que**, en vue en bout, la grille (6) comporte des mailles (9) constituées par des cloisons (13) radiales par rapport à l'axe (X-X) dudit tronçon T1 et par des parois (14) sensiblement parallèles à la paroi intérieure dudit tronçon T1.

5. Dispositif suivant l'une quelconque des revendications 1 à 4, **caractérisé en ce qu'**il comprend en outre, en amont de la grille (6) par rapport à la propagation du bruit, une couche (7) d'amortissement acoustique disposée autour d'au moins une partie de la périphérie d'un tronçon amont (T2) du conduit (1).

6. Dispositif suivant la revendication 5, **caractérisé en ce que** la couche d'amortissement (7) est adjacente à l'extrémité amont de la grille (6).

**7.** Dispositif suivant la revendication 5 ou 6, **caractérisé en ce que** le tronçon amont (T2) est constitué d'une toile métallique ou composite.

**8.** Dispositif suivant l'une quelconque des revendications 5 à 7, **caractérisé en ce que** la couche d'amortissement acoustique (7) a une longueur L2 et une épaisseur e vérifiant les relations suivantes :

$$L2 > \lambda_{fmax},$$

et

$$e > \lambda_{fmax}/4.$$

**9.** Conduit d'aéronef, appartenant notamment à un système de l'aéronef, **caractérisé en ce qu'**il est équipé d'un dispositif (5) suivant l'une quelconque des revendications précédentes.

**10.** Conduit d'aéronef suivant la revendication 9, **caractérisé en ce qu'**il débouche sur une ouverture (3) du fuselage (4) de l'aéronef, la grille (6) étant conformée, à sa sortie, en une grille (17) à fonction esthétique et/ou aérodynamique sensiblement disposée dans cette ouverture (3) du fuselage.

**Patentansprüche**

**1.** Vorrichtung zur Reduzierung von Lärm, der von einem Leitungsrohr (1) emittiert wird, das zu einem Luftfahrzeugsystem gehört, aufweisend ein akustisches Gitter (6), das in einem Abschnitt T1 des Leitungsrohrs angeordnet ist, wobei dieses Gitter eine Länge L1 hat entlang der Achse (X-X) des besagten Abschnitts und eine Mehrzahl von Maschen (9) aufweist, von denen jede in ein Quadrat der Seitenlänge m eingeschrieben ist, **dadurch gekennzeichnet, dass** die nachfolgenden Beziehungen erfüllt sind:

$$L1 > 1,8\lambda_{fmin}$$

$$m < \lambda_{fmax}/2,$$

wobei $f_{max}$ die maximale Frequenz des zu vermindernden Lärms ist,
$f_{min}$ die minimale Frequenz des zu vermindernden Lärms ist,
$\lambda_{fmax}$ die Wellenlänge des Lärms bei der Frequenz $f_{max}$ ist,

$\lambda_{fmin}$ die Wellenlänge des Lärms bei der Frequenz $f_{min}$ ist.

**2.** Vorrichtung gemäß Anspruch 1, **dadurch gekennzeichnet, dass** das Gitter (6) eine zentrale Öffnung (10) aufweist, deren Querabmessung in der gesamten Querrichtung des Leitungsrohrs kleiner als 0,75 D ist, wobei D die Abmessung der Öffnung des Leitungsrohrs in der gleichen Querrichtung bezeichnet.

**3.** Vorrichtung gemäß Anspruch 1 oder 2, **dadurch gekennzeichnet, dass** in der Frontansicht das Gitter (6) in quadratischen Maschen (9) gebildet ist.

**4.** Vorrichtung gemäß Anspruch 1 oder 2, **dadurch gekennzeichnet, dass** in der Frontansicht das Gitter (6) Maschen (9) aufweist, die gebildet sind von Zwischenwänden (13), die bezüglich der Achse (X-X) des besagten Abschnitts T1 radial sind, und von Seitenwänden (14), die im Wesentlichen parallel sind zu der Innenwand des besagten Abschnitts T1.

**5.** Vorrichtung gemäß irgendeinem der Ansprüche 1 bis 4, **dadurch gekennzeichnet, dass** sie ferner aufweist, bezüglich der Ausbreitung des Lärms vor dem Gitter (6), eine akustische Dämpfungsschicht (7), die um wenigstens einen Teil der Peripherie eines vorderen Abschnitts (T2) des Leitungsrohrs (1) angeordnet ist.

**6.** Vorrichtung gemäß Anspruch 5, **dadurch gekennzeichnet, dass** die Dämpfungsschicht (7) zu dem vorderen Ende des Gitters (6) benachbart ist.

**7.** Vorrichtung gemäß Anspruch 5 oder 6, **dadurch gekennzeichnet, dass** der vordere Abschnitt (T2) von einem Metall- oder Verbundstoff-Tuch gebildet ist.

**8.** Vorrichtung gemäß irgendeinem der Ansprüche 5 bis 7, **dadurch gekennzeichnet, dass** die akustische Dämpfungsschicht (7) eine Länge L2 und eine Dicke e hat, welche die nachfolgenden Beziehungen erfüllen:

$$L2 > \lambda_{fmax},$$

und

$$e > \lambda_{fmax}/4.$$

**9.** Luftfahrzeug-Leitungsrohr, das insbesondere zu einem Luftfahrzeug-System gehört, **dadurch gekennzeichnet, dass** es mit einer Vorrichtung (5) gemäß irgendeinem der vorhergehenden Ansprüche ausgestattet ist.

10. Luftfahrzeug-Leitungsrohr gemäß Anspruch 9, **dadurch gekennzeichnet, dass** es über einer Öffnung (3) des Rumpfs (4) des Luftfahrzeugs ausmündet, wobei das Gitter (6) an seinem Ausgang angepasst ist an ein Gitter (17) von ästhetischer und/oder aerodynamischer Funktion, das im Wesentlichen in dieser Öffnung (3) des Rumpfs angeordnet ist.

**Claims**

1. A device for reducing the noise emitted by a conduit (1) belonging to an aircraft system, comprising an acoustic grid positioned in a segment T1 of the conduit, said grid having a length L1, along the axis (X-X) of said segment, and including multiple meshes (9), each of which fits into a square with side $\underline{m}$, **characterized in that** the following relationships are satisfied:

$$L1 > 1{,}8\ \lambda_{fmin}$$

$$m < \lambda_{fmax}/2,$$

where $f_{max}$ is the maximum frequency of the noise to be attenuated,
$f_{min}$ is the minimum frequency of the nice to be attenuated,
$\lambda_{fmax}$ is the wavelength of the noise at frequency $f_{max}$, and
$\lambda_{fmin}$ is the wavelength of the noise at frequency $f_{min}$.

2. The device according to claim 1, **characterized in that** the grid (6) includes a central opening (10) whereof the transverse dimension is, in any transverse direction of the conduit, smaller than 0.75 D, where D designates the opening dimension of the conduit in the same transverse direction.

3. The device according to claim 1 or 2, **characterized in that**, seen from the end, the grid (6) has a square mesh (9).

4. The device according to claim 1 or 2, **characterized in that**, seen from the end, the grid (6) has meshes (9) made up of radial partitions (13) relative to the axis (X-X) of said segment T1 and walls (14) substantially parallel to the inner wall of said segment T1.

5. The device according to any one of claims 1 to 4, **characterized in that** it further comprises, upstream from the grid (6) relative to the propagation of the noise, an acoustic damping layer (7) arranged around at least part of the periphery of an upstream segment (T2) of the conduit (1).

6. The device according to claim 5, **characterized in that** the damping layer (7) is adjacent to the upstream end of the grid (6).

7. The device according to claim 5 or 6, **characterized in that** the upstream segment (T2) is made up of a metal or composite web.

8. The device according to any one of claims 5 or 7, **characterized in that** the acoustic damping layer (7) has a length L2 and a thickness $\underline{e}$ verifying the following relationships:

$$L2 > \lambda_{fmax},$$

and

$$e > \lambda_{fmax}/4.$$

9. An aircraft conduit, belonging in particular to a system of the aircraft, **characterized in that** it is equipped with a device (5) according to any one of the preceding claims.

10. The aircraft conduit according to claim 9, **characterized in that** it emerges on an opening (3) of the fuselage (4) of the aircraft, the grid (6) being configured, at its output, in a grid (17) with an esthetic and/or aerodynamic function substantially positioned **in that** opening (3) of the fuselage.

FIG.1

FIG.2

FIG.3

FIG.4

FIG.5

FIG.6

FIG.7

**EP 2 752 363 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 949428
- US 20090269219 A
- DE 2930162